# EUROPEAN PATENT SPECIFICATION

(11) **EP 2 888 095 B1**
(45) Date of publication and mention of the grant of the patent: **30.09.2020**
(21) Application number: 12883107.0
(22) Date of filing: 21.08.2012
(51) Int. Cl.: B29C 70/08, B29C 70/30, B29D 99/00, B64C 3/18, B29C 70/34, B64C 1/00

(54) **A REINFORCED STRUCTURE AND A METHOD FOR MANUFACTURING A REINFORCED STRUCTURE**
VERSTÄRKTE STRUKTUR UND VERFAHREN ZUR HERSTELLUNG EINER VERSTÄRKTEN STRUKTUR
STRUCTURE RENFORCÉE ET PROCÉDÉ POUR LA FABRICATION D'UNE STRUCTURE RENFORCÉE

(43) Date of publication of application: 01.07.2015
(73) Proprietor: SAAB AB, 581 88 Linköping (SE)
(72) Inventor: GRANKÄLL, Tommy, S-590 29 Borensberg (SE); GUSTAVSSON, Stefan, S-585 91 Linköping (SE); HALLANDER, Per, S-582 16 Linköping (SE); LUNDBERG, Anders, S-590 49 Vikingstad (SE); PETERSSON, Mikael, S-589 51 Linköping (SE); WEIDMANN, Björn, S-590 31 Borensberg (SE)
(74) Representative: Zacco Sweden AB
(86) International application number: PCT/SE2012/050890
(87) International publication number: WO 2014/031043

(56) References cited:
- EP-A1- 1 800 841
- EP-A1- 1 967 354
- EP-A1- 2 295 228
- US-A1- 2006 172 636
- US-A1- 2007 138 695
- US-A1- 2009 176 066
- US-A1- 2010 285 265
- US-A1- 2012 076 989
- US-A1- 2012 100 343
- US-B1- 6 520 706

## Description

### FIELD OF THE INVENTION

The present invention relates to a method for manufacturing a reinforced structure comprising at least one stiffening element attached to a shell element having a concave surface, according to the pre-characterising part of claim 1, and to a reinforced structure comprising at least one stiffening element of composite material attached to a concave surface of a shell element of composite material, according to the pre-characterising part of claim 6 . The present invention relates, but not limited, to aircraft industry.

### BACKGROUND OF THE INVENTION

Methods of manufacture of composite materials using "prepreg" material (layer of fibre material previously impregnated with resin) exist today. When manufacture of stiffening elements, such as aircraft ribs, frames etc, the composite material may have a curvature following a single curved or a double curved shell surface of a fuselage. It is today time-consuming to form an aircraft rib of composite material. Manual work for application of prepreg material is required since it is difficult to make the fibre material following the curvature.

The ribs and the shell can be cured simultaneously in a common curing procedure. In this case it is common that U-shaped or L-shaped stiffening elements are formed separately without being cured. Two equally shaped stiffening elements are then mounted together to form T-shaped or I-shaped stiffening elements, which are positioned on a shell. The T or I-shaped stiffening elements and the shell are then cured together in a common curing (co-curing) procedure, which adheres the T or I-shaped stiffening elements to the shell.

To stiffen the web of a T or I- shaped stiffening elements a flat reinforcing element is positioned between the flanges, i.e. in the "trunk" of the T. The reinforcing element is normally made of stacked prepregs.

If a T- or I-shaped stiffening element according to the prior art is to be connected to a concave shell, such as for example a wing profile which is bent span wise, a compression arises on the web of the stiffening element. This compression results in folds in the web. To prevent folds, indentations can be made in the web. The indentations make the stiffening element weaker.

EP1800841 A 1 discloses a stiffening element and a method for manufacturing of a stiffening element of composite material. The stiffening element is provided for attachment to a curved shell surface. A substantial flat blank of composite material comprising a first and a second essentially parallel elongated edge is provided for forming in the web of the stiffening element at least one rounded bulge having a conical form tapering from the first edge to a first folding line. Thereby a curved flange is achieved, which first folding line essentially merges with an apex of the rounded bulge.

The stiffening element described in EP1800841 A 1 works well, but it is subjected to development.

### SUMMARY OF THE INVENTION

A method for manufacturing a reinforced structure of the invention is defined in independent claim 1.

The present invention has the advantage that the stiffening element can be co- cured with the concave shell element. The reinforcing element then acts as a forming tool for the stiffening element. This simplifies the production and costs can be saved. Since the stiffening element has flat and solid body part, which is not indented, the stiffening element becomes more rigid in relation to traditional webs attached to concave shells. Furthermore, the outer bulged curvature of the web stiffens the stiffening element.

The composite material may e.g. be stacked prepregs forming a blank. Prepreg is the shortened name used as a reference to composite fabrics that have been pre-impregnated with thermosetting resin but not yet permanently cured (semi cured). These usually take the form of thin sheets consisting of a combination of a matrix (or resin) and fibre reinforcement. The fibres in each sheet can have one direction (unidirectional reinforcement) or several directions (fabric reinforcement). If the fibres are unidirectional the solid structure is obtained by placing a number of prepregs on top of each other, with varying fibre direction. The role of the matrix is to support the fibres and bond them together in the composite material. It also keeps the fibres in their position and chosen orientation. The prepregs are mostly stored in cooled areas since activation is most commonly done by heat.

Alternatively, the method comprises the further steps of forming the reinforcing element by applying sheets of composite material of different size on top of each other wherein larger sheets of composite material form a body part of the reinforcing element and the at least one forming bulge, and smaller sheets of composite material form the at least one forming bulge.

This step has the advantage that the direction of fibres of the reinforcing element may be altered, which increases the overall strength of the reinforcing element. The large sheets of composite material may be stacked on top of each other, forming a flat body part and the smaller sheets can be applied on top of the body part forming the at least one forming bulge.

Alternatively, smaller sheets and larger sheets may be interleaved or mixed on top each other, where the larger sheets contributes to form both the body part and the at least one forming bulge while the smaller sheets only contributes to form the at least one forming bulge.

This has the advantage that the reinforcing element will be stronger.

The step of forming a first profile and a second profile of composite material may comprise providing a first and a second flat blank of composite material and folding each of the first and the second flat blank into an L-form.

This has the advantage that the first and the second profiles each may be created in one step from one single blank.

Preferably, the step of co-curing the shell element and the at least one stiffening element is performed by sealing the shell element and the at least one stiffening element in a vacuum bag, evacuating air from the vacuum bag, heating the shell element and the at least one stiffening element by means of heating means, cooling the shell element and the at least one stiffening element and removing the finished shell element and the at least one stiffening element from the vacuum bag.

Thereby the stiffening element and the shell element can be finished in a short time and in a labour saving manner.

Suitably, the method of curing the shell element and the at least one stiffening element also comprises the step of compressing the shell element and the at least one stiffening element in an autoclave.

In such way eventual air pockets between the layers of the stiffening element can be minimized and limited to a certain predetermined extension.

A reinforced structure of the invention is defined in independent claim 6. This reinforced structure has a considerable strength and rigidity, which is desirable for e.g. aircraft assemblies.

Alternatively, the reinforcing element comprises sheets of composite material of different size applied on each other. Larger sheets form a body part of the reinforcing element and the at least one forming bulge, and smaller sheets form the at least one the forming bulge.

This step has the advantage that the direction of fibres of the reinforcing element may be altered, which increases the overall strength of the reinforcing element. The large sheets of composite material may be stacked on top of each other, forming a flat body part and the smaller sheets can be applied on top of the body part forming the forming bulges.

Alternatively, smaller sheets and larger sheets may be mixed on top each other, where the larger sheets contributes to form both the body part and the forming bulges, and the smaller sheets contributes to form the forming bulges. This has the advantage that the reinforcing element will be stronger.

The direction of the fibres in each layer may be the same. Each layer may also have fibres with several directions.

### BRIEF DESCRIPTION OF THE DRAWINGS

The present invention will now be described by way of example with reference to the accompanying schematic drawings of which:
- Fig 1:: Figure 1 shows a first embodiment of the reinforced structure with a shell element and a stiffening element.
- Fig 2:: Figure 2 shows a front view the reinforced structure according to the first embodiment.
- Fig 3:: Figure 3 shows the reinforced structure according to the first embodiment as seen from the cut C in figure 2.
- Fig 4:: Figure 4 shows a cut view of a portion of the stiffening element according to the first embodiment as seen from the cut A in figure 2.
- Fig 5:: Figure 5 shows a cut view of a portion of the stiffening element according to the first embodiment as seen from the cut B in figure 2.
- Fig 6:: Figure 6 shows a front view of the reinforcing element according to the first embodiment.
- Fig 7:: Figure 7 shows a second embodiment of the reinforced structure with a shell element and a stiffening element.
- Fig 8:: Figure 8 shows a cut view of a portion of the stiffening element according to the second embodiment.
- Fig 9:: Figure 9 shows a cut view of a portion of the stiffening element according to the second embodiment.
- Fig 10:: Figure10 shows a cut view of a portion of the stiffening element according to a third embodiment.
- Fig 11:: Figure 11 shows a cut view of a portion of a stiffening element according to a third embodiment.
- Fig 12:: Figure 12 shows a front view of the reinforcing element according to the third embodiment.
- Fig 13:: Figure 13 shows a cut view of a portion of a stiffening element according to a fourth embodiment.
- Fig 14:: Figure 14 shows a front view of the reinforcing element according to the fourth embodiment.
- Fig 15:: Figure 15 shows a cut view of a portion of the stiffening element according to a fifth embodiment.

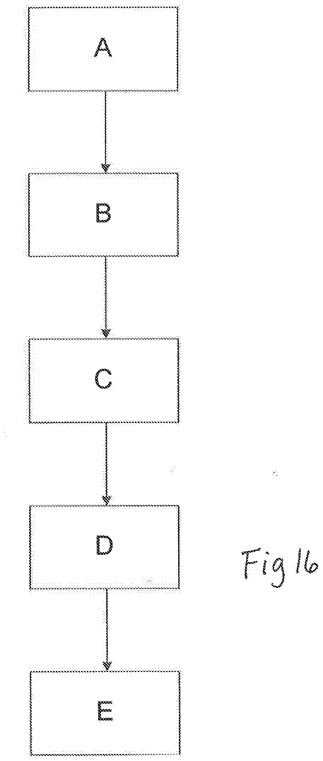

- Fig 16:: Figure 16 shows a flowchart of the described method.

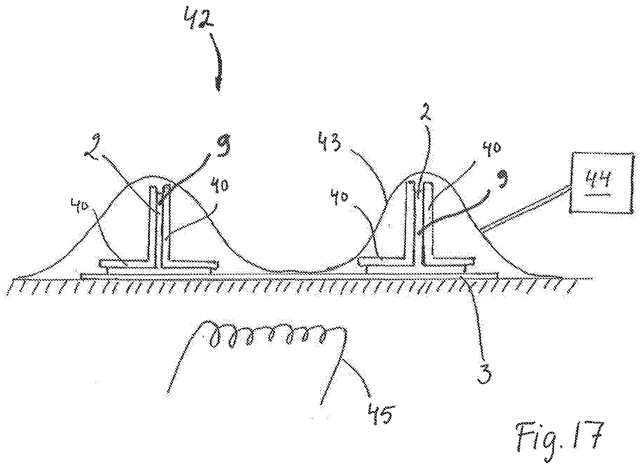

- Fig 17:: Figure 17 shows a curing tool with the stiffening element.

### DETAILED DESCRIPTION OF THE PREFERRED EMBODIMENTS

Hereinafter, embodiments of the present invention will be described in detail with reference to the accompanying drawings related to embodiments, wherein for the sake of clarity and understanding of the invention some details of no importance are deleted from the drawings.

For clarity reasons, the sheets of composite material of the shell element have not been depicted in the figures. The shell element is only illustrated as solid.

For purpose of making the invention clearer, the sheets of composite material of the first profile and the second profile have not been depicted in the figures. The first profile and the second profile are only illustrated as solid, essentially L-formed profiles.

For sake of clarity the sheets of composite material of the reinforcing element 7 are illustrated as short and long black lines, which are not touching each other. In reality the sheets of composite material are in close contact with each other.

The number of sheets of composite material forming the reinforcing element may be larger or smaller than illustrated in some of the figures. The illustrated number of sheets of composite material is only for clarifying the purpose of the invention.

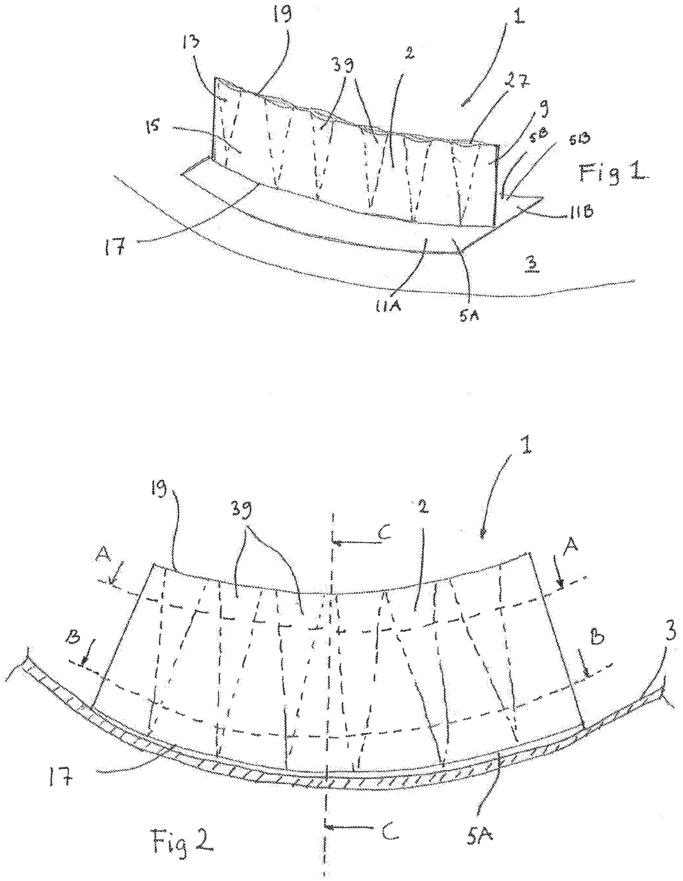

Figure 1 shows schematically a first embodiment of the reinforced structure 1. The reinforced structure 1 comprises a stiffening element 2 made of a composite material attached to a concave shell element 3 made of a composite material.

Figure 2 shows a side view of the stiffening element 2 and the shell element 3.

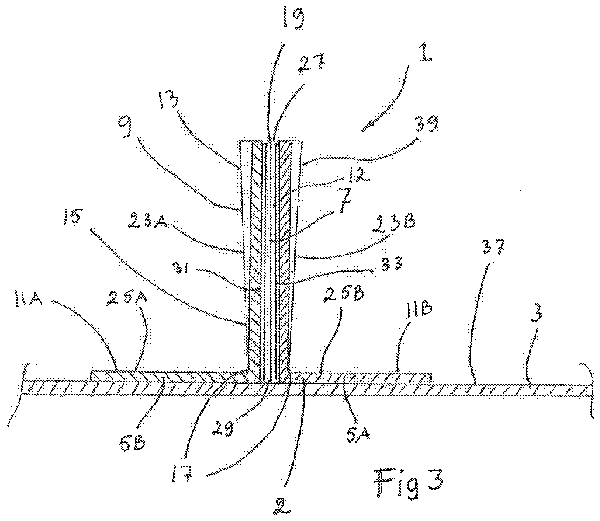

Figure 3 shows schematically the reinforced structure according to the first embodiment as seen from the cut C in figure 2. As seen the stiffening element 2 has a cross section area in the form of a turned upside down T. The stiffening element 2 has a web 9, a first fixation flange 11A and a second fixation flange 11B. The web 9 has an outer edge 19. The stiffening element 2 is formed by a first L-formed profile 5A made of a composite material, a second L-formed profile 5B made of a composite material and a reinforcing element 7 made of a composite material (also shown in figure 3). The first profile 5A has a first profile web 23A and first profile flange 25A, and the second profile 5B has a second profile web 23B and a second profile flange 25B. The reinforcing element 7 has an outer edge 27, an inner edge 29, a first side 31 and a second side 33. The web 9 is formed by the first profile web 23A, the second profile web 23B and the reinforcing element 7. The first fixation flange 11A is formed by the first profile flange 25A and the second fixation flange 11B is formed by the second profile flange 25B.

The first profile 5A and the second profile 5B may each be made of a blank, which each has been folded around a folding line 17 to obtain the form of an L. In this way the contour length of the outer edge 19 is the same as the folding line 17. Due to the concave form of the shell element 3, the outer edge 19 tend to be folded in un uncontrolled way.

This problem is solved by the reinforcing element 7 having a form such that, when the first and the second profiles 5A and 5B are put together with the reinforcing element 7, the reinforcing element 7 forms the first profile web 23A and the second profile web 23B so that the web 9 obtains a waved form with swellings 39. The swellings 39 are larger at the outer part 13 of the web 9 than at the inner part 15 of the web 9. Near the folding line 17 of the stiffening element 1, the swellings 39 are evened out and the web 9 is substantially plain (see figure 3).

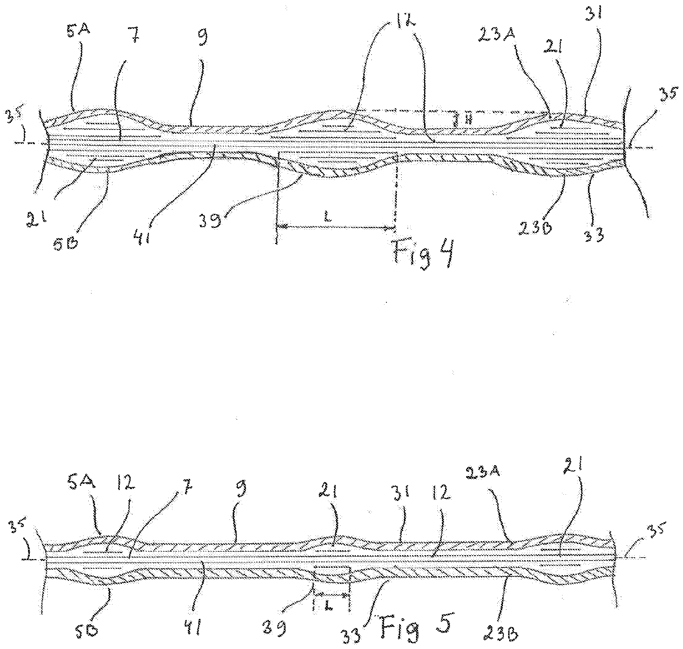

Figure 4 illustrates schematically a cross section view of the web 9 of the stiffening element 2 as seen from the cut A in figure 2.

Figure 5 illustrates schematically a cross section view of the web 9 as seen from the cut B in figure 2. Both cut A and cut B are taken along the web 9. Cut A is taken at a shorter distance from the outer edge 19 than cut B. Since the web 9 is curved, the cuts A and B follow a curved line AA and BB and not a straight line as in cut C. As seen from figures 4 and 5 the web 9 is formed by the first profile web 23A, the second profile web 23B and the reinforcing element 7, which is arranged between the first profile web 23A and the second profile web 23B. The reinforcing element 7 has a number of forming bulges 21 on each side of the reinforcing element 7. The forming bulges 21 forms swellings 39 arranged along each side of the web 9. Between the swellings 39, the web 9 is substantially flat. Due to the swellings 39, an outer surface of the web 9 obtains a waveform. The thickness H (see figure 4) of the swellings 39 is larger in the outer part 13 of the web 9 than in the inner part 15 of the web 9. This makes the waveform of the web 9 diminishing towards the folding line 17 (see also figure 1).

The number of bulges 21 as well as the thickness H of the bulges 21 is determined depending on the curvature of the shell element 3. If the shell element 3 is more concave (smaller radius of curvature), a larger number of swellings 39 is needed, or the thickness H of the swellings 39 must be larger. If the shell element 3 is less concave (larger radius of curvature), a smaller number of swellings 39 is needed, or the swellings 39 can be flatter.

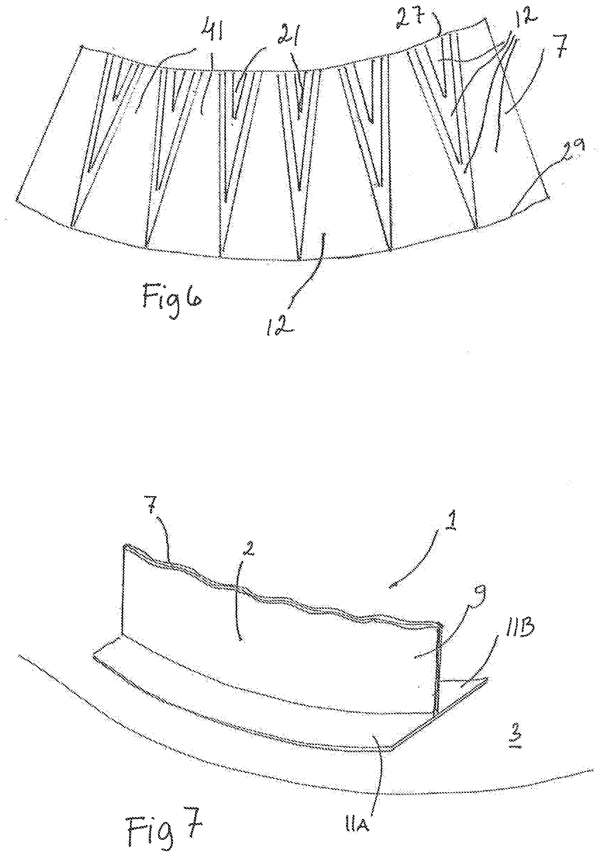

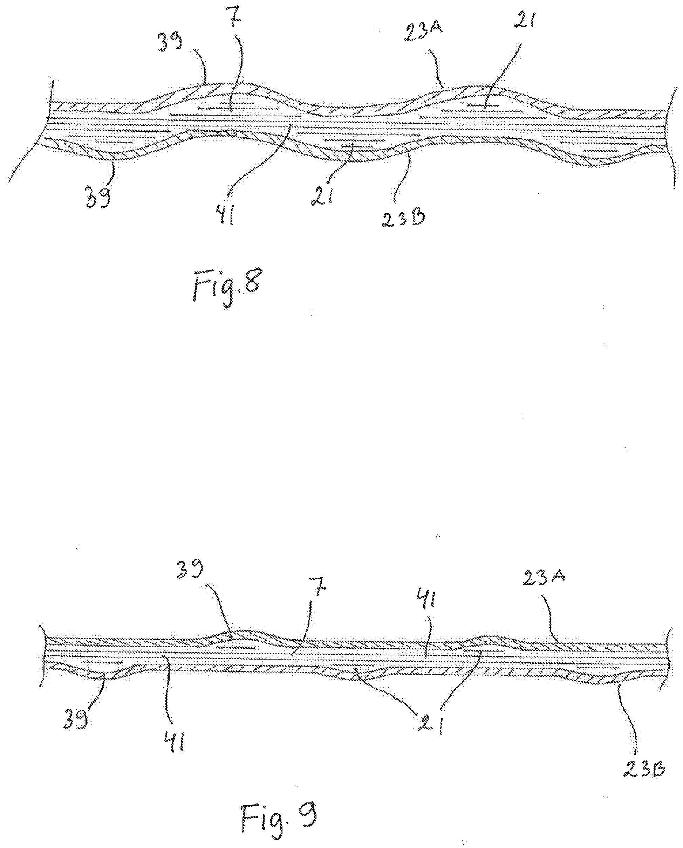

From figures 4 and 5 it can be seen that the reinforcing element 7 may be made of stacked sheets 12 of composite material like e.g. prepregs. Large sheets 12 of composite material extend along the whole reinforcing element 7 and form a body part 41 and the at least two forming bulges 21 of the reinforcing element 7. Smaller sheets 12 of composite material from the at least two forming bulges 21. In order to make the swellings 39 larger in the outer part 13 of the web 9 than in the inner part 15 of the web 9, the number of small sheets 12 of composite material applied on top of each other is higher in the outer part 13 of the web 9 than in the inner part 15 of the web 9.
The smaller sheets 12 of composite material may have a length L which is larger in the outer part 13 of the web 9 than in the inner part 15 of the web 9 as shown in figures 4, 5 and 8. The size of the smaller sheets 12 are also smaller further out from a centre line 35 of the reinforcing element 7. Figure 6 shows the reinforcing element 7 with the small sheets 12 of composite materials applied on top of each other and forming the forming bulges 21.

The reinforcing element 7 must not be symmetrical with regard to a cross section centre line 35 as in figure 4. According to another embodiment the forming bulges 21 on each side of the reinforcing element 7 may e.g. be displaced and having an offset in regard of each other. This is illustrated in figures 7-9. If there is a forming bulge 21 on one side of the reinforcing element 7, the other side of the reinforcing element 7 is flat, and inversely. Since the swellings 39 of the web 9 are formed by the forming bulges 21, the swellings 39 will also be displaced and have an offset in regard of each other.

The smaller and the larger sheets 12 of composite material in the reinforcing element 7 may be applied in a way showed in figures 4, 5, 8 and 9, where the large sheets 12 extending along the whole reinforcing element are applied near the centre line 35 of the of the reinforcing element 7 and the smaller sheets 12 are applied further out from the centre line 35.

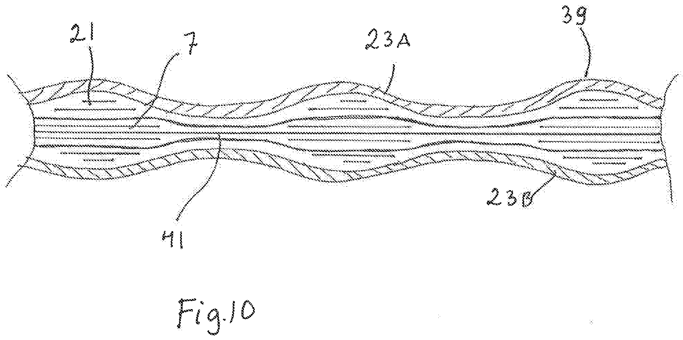

According to yet another embodiment the smaller and the larger sheets 12 of composite material may also be interleaved, so that large sheets 12 of composite material may be applied on top of smaller sheets 12 of composite material and vice versa. This is illustrated in figure 10. By interleaving the smaller and larger sheets 12 of composite material in this way the reinforcing element 7 will be stronger and more rigid.

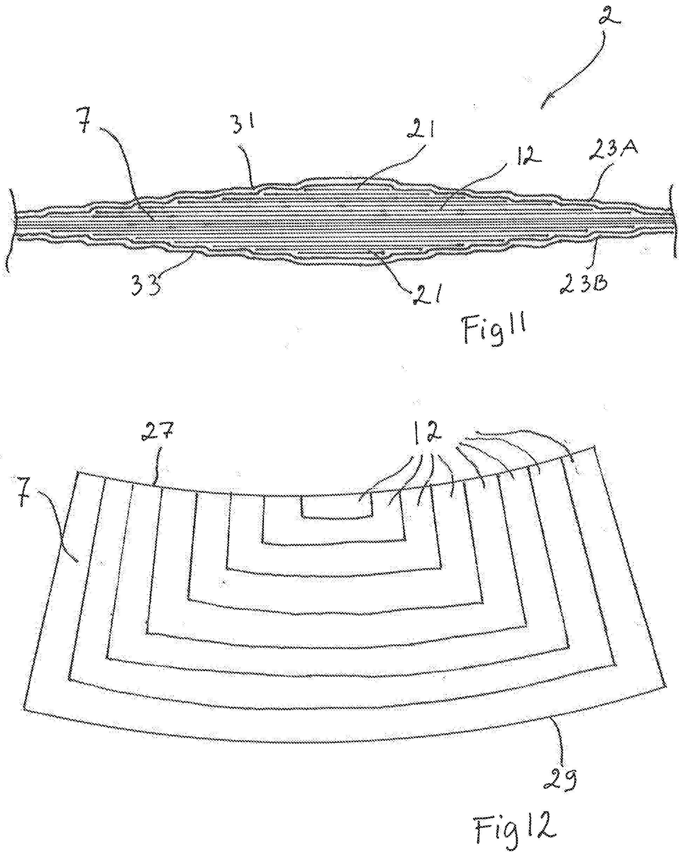

Figure 11 shows schematically a cut view of a portion of a stiffening element 2 according to another embodiment. The reinforcing element 7 comprises only one forming bulge 21 on each of the first side 31 and second side 33 of the reinforcing element 7.

Figure 12 shows schematically a front view of the reinforcing element 7 according to this embodiment. The sheets 12 of composite material are positioned with smaller and smaller sheets 12 on top of each other on each of the first side 31 and second side 33 of the reinforcing element 7.

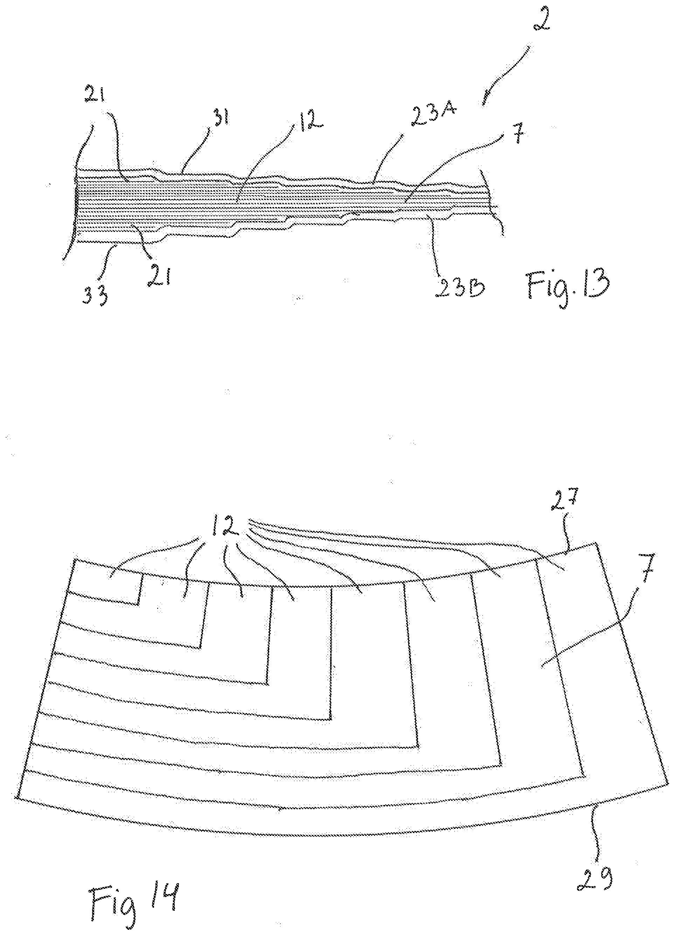

Figure 13 shows schematically a cut view of a portion of a stiffening element 2 according to a fifth embodiment. The reinforcing element 7 comprises one forming bulge 21 on each of the first side 31 and second side 33 of the reinforcing element 7. The forming bulge 21 according to this embodiment is not symmetrical. It has a a form of truncated bulge, which tapers towards the inner edge 29 of the reinforcing element 7 and towards the opposite end in the lengthwise direction of the reinforcing element 7. This form of the reinforcing element 7 is especially useful when used in a stiffening element 2, of which the stiffening element 2 has to be stronger and thicker in one end than in the other end.

Figure 14 shows schematically a front view of the reinforcing element 7 according to the fifth embodiment. The sheets 12 of composite material are positioned with smaller and smaller sheets 12 on top of each other on each of the first side 31 and second side 33 of the reinforcing element 7.

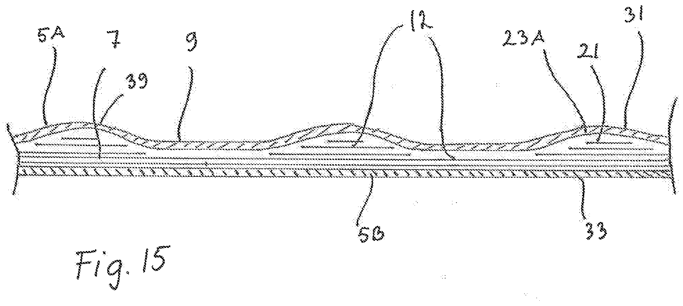

Only one of the first side 31 or the second side 33 of the reinforcing element 7 may be provided with one or several forming bulges 21. This is shown in figure 15. The reinforcing element 7 comprises forming bulges 21 on the first side 31 but not on the second side 33. The second profile 5B may then be folded or indented in order to fit into the concave shell element 3 (not shown in figure 18).

Figure 19 shows a flowchart of a method for manufacturing the reinforced structure. According to this method the shell element 3 and the stiffening element 2 are created separately and then cured together (co-cured).
In the first step the shell element 3 is provided (step A). The shell element 3 may be created by applying a number of substantially equally sized sheets 12 of composite material on top of each other, thereby forming a blank, and positioning the blank on a curved frame (not shown).

Then, in the second step (step B), the stiffening element 2 is provided by providing a first profile 5A, a second profile 5B and a reinforcing element 7.

The first profile 5A comprises a first profile web 23A and a first profile flange 25A, and the second profile 5B comprises a second profile web 23B and a second profile flange 25B.

The first and the second profiles 5A and 5B may each be created by applying a number of substantially equally sized sheets 12 of composite material on top of each other, thereby forming a flat blank, and then folding the blank into an L-shaped profile.

The reinforcing element comprises a first side 31, a second side 33, an outer edge 27, an inner edge 29, and at least one forming bulge 21 on at least one of the respective sides 31 and 33. The at least one forming bulge 21 extend from the outer edge 27 to the inner edge 29. The thickness of the at least one forming bulge 21 is largest at the outer edge 27, tapers towards the inner edge 29 and is levelled out at the inner edge 29.

The reinforcing element 7 may be created by applying a number of smaller and larger sheets 12 of composite material on top of each other. By applying larger sheets 12 of composite material in combination with smaller sheets 12 of composite material on certain areas of each of the first side 31 and the second side 33, and by applying only larger sheets 12 of composite material on other areas of each of the first side 31 and the second side 33 of the reinforcing element 7, the first side 31 and the second side 33 obtain a waveform comprising the forming bulges 21. The composite material is applied so that the thickness of the forming bulges 21 are largest at the outer edge 27 of the reinforcing element 7 and decreases and flattens out at the inner edge 29 of the reinforcing element 7.

The reinforcing element 7 is positioned between the first profile web 23A and the second profile web 23B. The first side 31 of the reinforcing element 7 abuts the first profile web 23A, the second side 33 of the reinforcing element 7 abuts the second profile web 23B, and the inner edge 29 of the reinforcing element 7 is positioned essentially flush with first profile flange 11A and the second profile flange 11B. The web 9 of the stiffening element 2 is formed by the first profile web 23A, the second profile web 23B and by the reinforcing element 7. The first fixation flange 11A is formed by the first profile flange 25A and the second fixation flange 11B is formed by the second profile flange 25B.

Next, the stiffening element 2 is positioned on the shell element 3 (step C). The shell element 3 and the stiffening element 2 are cured together (step D) in a curing tool 42. This makes the first profile 5A and the second profile 5B of a stiffening element 2 adhering to the reinforcing element 7 of the same stiffening element 1. Hereby, the web 9 of a stiffening element 2 adopts a form essentially corresponding to the form of the reinforcing element 7. The stiffening element 2 also adheres to the shell element 3. The last step (step E) is to remove the reinforced structure 1 from the curing tool 42.

Figure 20 illustrates the curing process of two stiffening elements 2, which are to be connected to a shell element 3, in the curing tool 42. The curing tool 42 comprises a forming tool 40, a vacuum bag 43, a pump 44 for pumping out air and heating means 45. The forming tool 40 prevents deformation of the stiffening elements 2 during the curing process. In this example, the forming tool 40 has the form of L-formed beams. The curing process comprises the following steps: Positioning the forming tool 40 so that it supports the stiffening elements 2. In this example the L-formed beams are positioned so that they surround the stiffening elements 2 and clamp the webs 9. The forming tool 40, the shell element 3 and the stiffening elements 2 are sealed in the vacuum bag 43. Thereafter air is evacuated from the vacuum bag 43. Then the shell element 3 and the stiffening elements 2 are heated by means of heating means 45. Thereafter they are cooled and removed from the curing tool 42.

The present invention is of course not in any way restricted to the preferred embodiments described above, but many possibilities to modifications, or combinations of the described embodiments, thereof should be apparent to a person with ordinary skill in the art without departing from the invention as defined in the appended claims.

The shell element 3 may be curved in one direction (single curved shell element surface) or in several directions (double curved shell element surface). For sake of clarity the shell element 3 in the figures is only curved in one direction. A single curved shell element surface has the effect that the reinforcing element can be used for e.g. an aircraft structure. A double curved shell element surface has the effect that the reinforcing element can be used for e.g. an aircraft winglet shell.

The first profile 5A and the second profile 5B may comprise a web and two flanges, each profile 5A and 5B having a form of a U-profile. In this case the flanges, which are not attached to the shell element 3, must be folded or provided with indentations (not shown).

The word "bulge" used in this documents represents a thickening of the reinforcing element protruding from the reinforcing element. The bulge may be symmetrical but this is not necessary. The contour of the bulge may be smooth, but it may also be stepped .

The method of providing the blank of composite material may be performed by an automatic tape laying machine (ATLM). Thereby the manufacturing of stiffening elements of composite material can be cost-effective since the blank has a rectangular form. The manufacture is time-saving and the ATL-machine can be re-programmed for different types of blanks earmarked for a certain stiffening element dedicated for a certain aircraft type. Prepreg tapes including fibres that extend continuously within the tape are to be applied in the longitudinal direction of the blank. Perpendicular and diagonally to the longitudinal direction of the blank, sections of prepreg tape will be applied rapidly and accurately resulting in fibre orientation in a direction transverse and diagonally to the longitudinal direction of the blank. Other layers may have fibres aligned in different directions. These and other directions can be determined from the desired properties of the stiffening element and being programmed into the ATL-machine.

The shell element 3 and the stiffening element 2 may be cured in an autoclave (not shown) for compressing them so that eventual air pockets between the plastic layers can be minimized and limited to a certain predetermined extension.

The reinforcing element 7 may have a lower curing temperature than the first and the second semi cured profiles 5A and 5B. In this way the reinforcing element 7 acts as forming tool during the curing process.

The word folding in the present application can be replaced by the words bending, curving etc. Folds of the stiffening element are understood to be provided essentially rounded, also where the figures show sharp curves or sharp bends. The wording radius of curvature shall be interpreted as a curvature with one radius or a curvature with several different radii.

The invention is particularly, but not exclusively, applicable to larger aircraft such as passenger carrying aircraft or freight carrying aircraft.

## Claims

1. A method for manufacturing a reinforced structure (1) of composite material comprising at least one stiffening element (2) attached to a concave surface (37) of a shell element (3), the stiffening element (2) comprising a web (9), a first fixation flange (11A) and a second fixation flange (11B), wherein the method comprises the following steps:
- forming a concave semi cured shell element (3) of composite material,
- forming at least one semi cured stiffening element (2) by:
- forming a first semi cured profile (5A) and a second semi cured profile (5B) of composite material, the first semi cured profile (5A) comprising a first profile web (23A) and a first profile flange (25A) and the second semi cured profile (5A) comprising a second profile web (23B) and a second profile flange (25B),
- forming a semi cured reinforcing element (7) of composite material, which semi cured reinforcing element (7) comprises a first side (31), a second side (33), each side having an outer edge (27) and an inner edge (29), and at least one forming bulge (21) on at least one of the respective sides (31; 33), which at least one forming bulge (21) extends from the outer edge (27) to the inner edge (29), wherein a thickness of the at least one forming bulge (21) is largest at the outer edge (27), tapers towards the inner edge (29) and is levelled out at the inner edge (29),
- positioning the semi cured reinforcing element (7) between the first profile web (23A) and the second profile web (23B),
- positioning the at least one semi cured stiffening element (2) on the semi cured shell element (3)
- co-curing the semi cured shell element (3) and the at least one semi cured stiffening element (2) in a curing tool (42), wherein the first semi cured profile (5A) and the second semi cured profile (5B), adheres to the semi cured reinforcing element (7), whereby the web (9) of the semi cured stiffening element (2) adopts the shape of the semi cured reinforcing element (7), and wherein the semi cured stiffening element (2) adheres to the semi cured shell element (3),
- removing the reinforced structure (1) from the curing tool (42).

2. A method according to claim 1, wherein the step of forming a semi cured reinforcing element (7) of composite material is performed by applying sheets (12) of composite material of different size on top of each other, wherein larger sheets (12) of composite material form a body part (41) of the semi cured reinforcing element (7) and the at least one forming bulge (21) and smaller sheets (12) of composite material form the at least one forming bulge (21).

3. A method according to any of claims 1-2, **wherein** the step of forming a semi cured first profile (5A) and a second semi cured profile (5B) of composite material, comprises providing a first and a second flat blank of composite material and folding each of the first and the second flat blank into an L-form.

4. A method according to any of claims 1-3, wherein the step of co-curing the semi cured shell element (3) and the at least one semi cured stiffening element (2) is performed by:
- sealing the semi cured shell element (3) and the at least one semi cured stiffening element (2) in a vacuum bag;
- evacuating air from said vacuum bag;
- heating the semi cured shell element (3) and the at least one semi cured stiffening element (2) by means of heating means.

5. A method according to any of claims 1-4, wherein the method of co-curing the shell element (3) and the at least one stiffening element (2) comprises the step of:
- compressing the semi cured shell element (3) and the at least one semi cured stiffening element (2) in an autoclave.

6. A reinforced structure (1) comprising at least one stiffening element (2) of composite material attached to a concave surface (37) of a shell element (3) of composite material, wherein said stiffening element (2) comprises a first profile (5A) and a second profile (5B) connected to each other and forming a web (9) having an outer edge (19), a first fixation flange (11A) and a second fixation flange (11B), which respective outer surface has a radius of curvature corresponding with said shell element surface (37), **characterised in that** said stiffening element (2) further comprises:
- a reinforcing element (7) of composite material, which reinforcing element (7) comprises a first side (31) and a second side (33),
each side having an outer edge (27) and an inner edge (29), and at least one forming bulge (21) on at least one of the respective sides (31; 33), which forming bulge (21) extend from the outer edge (27) to the inner edge (29), wherein a thickness of the at least one forming bulge (21) is largest at the outer edge (27), tapers towards the inner edge (29) and is levelled out at the inner edge (29),
wherein the reinforcing element (7) is positioned between the first profile web (23A) and the second profile web (23B).

7. A reinforced structure (1) according to claim 6, wherein the reinforcing element (7) comprises sheets (12) of composite material of different size positioned on top of each other, wherein larger sheets (12) form a body part (41) of the reinforcing element (7) and the at least one forming bulge (21), and smaller sheets (12) form the at least one forming bulge (21).

## Patentansprüche

1. Verfahren zur Herstellung einer verstärkten Struktur (1) aus Verbundmaterial umfassend mindestens ein an einer konkaven Oberfläche (37) eines Schalenelements (3) befestigtes Versteifungselement (2), wobei das Versteifungselement (2) eine Bahn (9), einen ersten Befestigungsflansch (11A) und einen zweiten Befestigungsflansch (11B) umfasst, wobei das Verfahren die folgenden Schritte umfasst:
- Bilden eines konkaven halbgehärteten Schalenelements (3) aus Verbundmaterial, Bilden mindestens eines halbgehärteten Versteifungselements (2) durch:
Bilden eines ersten halbgehärteten Profils (5A) und eines zweiten halbgehärteten Profils (5B) aus Verbundmaterial, wobei das erste halbgehärtete Profil (5A) eine erste Profilbahn (23A) und einen ersten Profilflansch (25A) umfasst, und das zweite halbgehärtete Profil (5A) eine zweite Profilbahn (23B) und einen zweiten Profilflansch (25B) umfasst,
Bilden eines halbgehärteten Verstärkungselements (7) aus Verbundmaterial, wobei das halbgehärtete Verstärkungselement (7) eine erste Seite (31), eine zweite Seite (33), wobei jede Seite eine Außenkante (27) und eine Innenkante (29) aufweist, und mindestens eine Formwölbung (21) auf mindestens einer der jeweiligen Seiten (31; 33) umfasst, wobei sich mindestens eine Formwölbung (21) von der Außenkante (27) zur Innenkante (29) erstreckt, wobei eine Dicke der mindestens einen Formwölbung (21) an der Außenkante (27) am größten ist, sich zur Innenkante (29) hin verjüngt und an der Innenkante (29) ausgeglichen ist,
- Anordnen des halbgehärteten Verstärkungselements (7) zwischen der ersten Profilbahn (23A) und der zweiten Profilbahn (23B),
- Anordnen des mindestens einen halbgehärteten Versteifungselements (2) auf dem halbgehärteten Schalenelement (3)
- Co-Härten des halbgehärteten Schalenelements (3) und des mindestens einen halbgehärteten Versteifungselements (2) in einem Härtungswerkzeug (42), wobei das erste halbgehärtete Profil (5A) und das zweite halbgehärtete Profil (5B) an dem halbgehärteten Verstärkungselement (7) haften, wobei die Bahn (9) des halbgehärteten Versteifungselements (2) die Form des halbgehärteten Verstärkungselements (7) annimmt, und wobei das halbgehärtete Versteifungselement (2) am halbgehärteten Schalenelement (3) haftet,
- Entfernen der verstärkten Struktur (1) vom Härtungswerkzeug (42).

2. Verfahren nach Anspruch 1, wobei der Schritt des Bildens eines halbgehärteten Verstärkungselements (7) aus Verbundmaterial durch Aufbringen von Folien (12) aus Verbundmaterial unterschiedlicher Größe übereinander durchgeführt wird, wobei größere Folien (12) aus Verbundmaterial einen Körperteil (41) des halbgehärteten Verstärkungselements (7) bilden, und die mindestens eine Formwölbung (21) und kleinere Folien (12) aus Verbundmaterial die mindestens eine Formwölbung (21) bilden.

3. Verfahren nach einem der Ansprüche 1-2, wobei der Schritt des Bildens eines halbgehärteten ersten Profils (5A) und eines zweiten halbgehärteten Profils (5B) aus Verbundmaterial das Bereitstellen eines ersten und eines zweiten flachen Rohlings aus Verbundmaterial und das Falten jedes des ersten und des zweiten flachen Rohlings in eine L-Form umfasst.

4. Verfahren nach einem der Ansprüche 1-3, wobei der Schritt des Co-Härtens des halbgehärteten Schalenelements (3) und des mindestens einen halbgehärteten Versteifungselements (2) durchgeführt wird durch:
- Versiegeln des halbgehärteten Schalenelements (3) und des mindestens einen halbgehärteten Versteifungselements (2) in einem Vakuumbeutel;
- Evakuieren von Luft aus dem Vakuumbeutel;
- Erwärmen des halbgehärteten Schalenelements (3) und des mindestens einen halbgehärteten Versteifungselements (2) mit Hilfe von Heizmitteln.

5. Verfahren nach einem der Ansprüche 1-4, wobei das Verfahren des Co-Härtens des Schalenelements (3) und des mindestens einen Versteifungselements (2) den folgenden Schritt umfasst:
- Komprimieren des halbgehärteten Schalenelements (3) und des mindestens einen halbgehärteten Versteifungselements (2) in einem Autoklav.

6. Verstärkte Struktur (1), die mindestens ein Versteifungselement (2) aus Verbundmaterial umfasst, das an einer konkaven Oberfläche (37) eines Schalenelements (3) aus Verbundmaterial befestigt ist,
wobei das Versteifungselement (2) ein erstes Profil (5A) und ein zweites Profil (5B) umfasst, die miteinander verbunden sind und eine Bahn (9) mit einer Außenkante (19), einem ersten Befestigungsflansch (11A) und einem zweiten Befestigungsflansch (11B) bilden, welche jeweilige Außenfläche einen der Oberfläche (37) des Schalenelements entsprechenden Krümmungsradius aufweist, **dadurch gekennzeichnet, dass** das Versteifungselement (2) ferner umfasst:
- ein Verstärkungselement (7) aus Verbundmaterial, wobei das Verstärkungselement (7) eine erste Seite (31) und eine zweite Seite (33) umfasst,
wobei jede Seite eine Außenkante (27) und eine Innenkante (29) aufweist, und mindestens eine Formwölbung (21) auf mindestens einer der jeweiligen Seiten (31; 33), welche Formwölbung (21) sich von der Außenkante (27) zur Innenkante (29) erstreckt, wobei eine Dicke der mindestens einen Formwölbung (21) an der Außenkante (27) am größten ist, sich zur Innenkante (29) hin verjüngt und an der Innenkante (29) ausgeglichen ist,
wobei das Verstärkungselement (7) zwischen der ersten Profilbahn (23A) und der zweiten Profilbahn (23B) angeordnet ist.

7. Verstärkte Struktur (1) nach Anspruch 6, wobei das Verstärkungselement (7) Folien (12) aus Verbundmaterial unterschiedlicher Größe umfasst, die übereinander angeordnet sind, wobei größere Folien (12) einen Körperteil (41) des Verstärkungselements (7) und die mindestens eine Formwölbung (21) bilden, und kleinere Folien (12) die mindestens eine Formwölbung (21) bilden.

## Revendications

1. Procédé de fabrication d'une structure renforcée (1) en matériau composite comprenant au moins un élément de raidissement (2) fixé à une surface concave (37) d'un élément de coque (3), l'élément de raidissement (2) comprenant une nappe (9), une première bride de fixation (11A) et une deuxième bride de fixation (11B), le procédé comprenant les étapes consistant à :
- former un élément de coque concave semi-durci (3) en matériau composite,
- former au moins un élément de raidissement semi-durci (2) en :
- formant un premier profil semi-durci (5A) et un deuxième profil semi-durci (5B) en matériau composite, le premier profil semi-durci (5A) comprenant une première nappe profilée (23A) et une première bride profilée (25A) et le deuxième profil semi-durci (5A) comprenant une deuxième nappe profilée (23B) et une deuxième bride profilée (25B),
- formant un élément de renforcement semi-durci (7) en matériau composite, ledit l'élément de renforcement semi-durci (7) comprenant un premier côté (31), un deuxième côté (33), chaque côté ayant un bord extérieur (27) et un bord intérieur (29), et au moins un renflement de formage (21) sur au moins un des côtés respectifs (31; 33), dont au moins un renflement de formage (21) s'étend du bord extérieur (27) au bord intérieur (29), une épaisseur de l'au moins un renflement de formage (21) étant la plus large au niveau du bord extérieur (27), se rétrécissant vers le bord intérieur (29) et étant nivelée au niveau du bord intérieur (29),
- positionnant l'élément de renforcement semi-durci (7) entre la première nappe profilée (23A) et la deuxième nappe profilée (23B),
- positionnant l'au moins un élément de raidissement semi-durci (2) sur l'élément de coque semi-durci (3),
- co-durcissant l'élément de coque semi-durci (3) et l'au moins un élément de raidissement semi-durci (2) dans un outil de durcissement (42), le premier profil semi-durci (5A) et le deuxième profil semi-durci (5B) adhérant à l'élément de renforcement semi-durci (7), la nappe (9) de l'élément de raidissement semi-durci (2) adoptant la forme de l'élément de renforcement semi-durci (7), et l'élément de raidissement semi-durci (2) adhérant à l'élément de coque semi-durci (3),
- retirant la structure renforcée (1) à partir de l'outil de durcissement (42).

2. Procédé selon la revendication 1, dans lequel l'étape de formation d'un élément de renforcement semi-durci (7) en matériau composite est réalisée en appliquant des feuilles (12) en matériau composite de différentes tailles positionnées les unes sur les autres, des feuilles plus grandes (12) en matériau composite formant une partie de corps (41) de l'élément de renforcement semi-durci (7) et de l'au moins un renflement de formage (21), et des feuilles plus petites (12) en matériau composite formant l'au moins un renflement de formage (21).

3. Procédé selon l'une quelconque des revendications 1 à 2, dans lequel l'étape de formation d'un premier profil semi-durci (5A) et d'un deuxième profil semi-durci (5B) en matériau composite, comprend la fourniture d'une première et d'une deuxième ébauche plate en matériau composite et le pliage de chacune des première et deuxième ébauches plates en forme de L.

4. Procédé selon l'une quelconque des revendications 1 à 3, dans lequel l'étape de co-durcissement de l'élément de coque semi-durci (3) et de l'au moins un élément de raidissement semi-durci (2) est effectuée en :
- scellant l'élément de coque semi-durci (3) et l'au moins un élément de raidissement semi-durci (2) dans un sac sous vide ;
- évacuant de l'air dudit sac sous vide ;
- chauffant l'élément de coque semi-durci (3) et l'au moins un élément de raidissement semi-durci (2) au moyen de moyens de chauffage.

5. Procédé selon l'une quelconque des revendications 1 à 4, dans lequel le procédé de co-durcissement de l'élément de coque (3) et de l'au moins un élément de raidissement (2) comprend l'étape de :
- la compression de l'élément de coque semi-durci (3) et de l'au moins un élément de raidissement semi-durci (2) dans un autoclave.

6. Structure renforcée (1) comprenant au moins un élément de raidissement (2) en matériau composite fixé à une surface concave (37) d'un élément de coque (3) en matériau composite,
dans lequel ledit élément de raidissement (2) comprend un premier profil (5A) et un deuxième profil (5B) reliés entre eux et formant une nappe (9) ayant un bord extérieur (19), une première bride de fixation (11A) et une deuxième bride de fixation (11B), dont la surface extérieure respective a un rayon de courbure correspondant à ladite surface d'élément de coque (37), **caractérisée en ce que** ledit élément de raidissement (2) comprend en outre :
- un élément de renforcement (7) en matériau composite, ledit élément de renforcement (7) comprenant un premier côté (31) et un deuxième côté (33),
chaque côté ayant un bord extérieur (27) et un bord intérieur (29), et au moins un renflement de formage (21) sur au moins un des côtés respectifs (31; 33), ledit renflement de formage (21) s'étendant du bord extérieur (27) au bord intérieur (29), une épaisseur de l'au moins un renflement de formage (21) étant la plus large au bord extérieur (27), se rétrécissant vers le bord intérieur (29) et étant nivelée au bord intérieur (29),
dans lequel l'élément de renforcement (7) est positionné entre la première nappe profilée (23 A) et la deuxième nappe profilée (23B).

7. Structure renforcée (1) selon la revendication 6, dans laquelle l'élément de renforcement (7) comprend des feuilles (12) en matériau composite de différentes tailles positionnées les unes sur les autres, des feuilles plus grandes (12) formant une partie de corps (41) de l'élément de renforcement (7) et de l'au moins un renflement de formage (21), et des feuilles plus petites (12) formant l'au moins un renflement de formage (21).
